# FASCICULE DE BREVET EUROPEEN

(11) **EP 3 765 337 B1**
(45) Date de publication et mention de la délivrance du brevet: **19.01.2022**
(21) Numéro de dépôt: 19709970.8
(22) Date de dépôt: 15.03.2019
(51) Int. Cl.: B60R 19/48, B60R 11/00, G01S 13/93

(54) **DISPOSITIF DE SUPPORT POUR ELEMENT DE DETECTION D'UN VEHICULE AUTOMOBILE ET SON PROCEDE DE MONTAGE**
VORRICHTUNG ZUR BEFESTIGUNG EINES SENSORS AN EINEM FAHRZEUG SOWIE MONTAGEVERFAHREN
SENSOR SUPPORT FOR A VEHICLE AND METHOD OF MOUNTING

(30) Priorité: 16.03.2018 FR 1852254
(43) Date de publication de la demande: 20.01.2021
(73) Titulaire: Renault S.A.S., 92100 Boulogne-Billancourt (FR)
(72) Inventeur: GLASSON, Emmanuel, 92160 ANTONY (FR); DELEON, Catherine, 78140 VELIZY (FR); HUGLIN, Olivier, 78190 TRAPPES (FR); DUBOIS, Nicolas, 91340 OLLAINVILLE (FR); CORREIA, Philippe, 92100 BOULOGNE-BILLANCOURT (FR)
(86) Numéro de dépôt international: PCT/EP2019/056586
(87) Numéro de publication internationale: WO 2019/175408

(56) Documents cités:
- DE-U1-202011 001 928
- US-A1- 2015 318 608

## Description

L'invention concerne un dispositif de support pour un élément de détection d'un véhicule automobile ainsi que son procédé de montage.

Afin d'améliorer la sécurité des véhicules automobiles, les constructeurs sont amenés à équiper les véhicules d'un système de freinage d'urgence autonome souvent désigné par l'acronyme anglais «AEB» (Automatic Emergency Braking). Ce type de système aide à éviter les accidents en identifiant rapidement les situations critiques et en avertissant le conducteur. Il permet également de réduire le degré de gravité des accidents qui ne peuvent être évités en réduisant la vitesse de collision et, dans certains cas, en préparant le véhicule et les dispositifs de retenue en prévision de l'impact. La plupart des systèmes AEB s'appuient sur un élément de détection pour identifier les obstacles potentiels à l'avant de la voiture. Cet élément de détection peut, par exemple, utiliser les ondes électromagnétiques tel qu'un radar ou utiliser une technologie de télédétection de type LIDAR (« light detection and ranging », détection de la lumière et mesure à distance), notamment dans l'infrarouge.

Cet élément de détection doit être implanté sur la face avant du véhicule, le plus en avant possible du véhicule afin d'être en mesure de capter les informations nécessaires au fonctionnement du système AEB. Les constructeurs peuvent ainsi être amenés à implanter le dispositif de détection dans la zone dite des « petits chocs », c'est-à-dire des chocs à une vitesse inférieure à 4 km/h n'entraînant pas de dommages sur le véhicule. Or, l'élément de détection ne doit pas être endommagé lors de ces chocs au risque de perturber le fonctionnement du système AEB.

En outre, il est préférable de pouvoir régler précisément la position de l'élément de détection.

Le document US 2015/0318608 A1 décrit un dispositif de support d'un élément de détection.

Il existe donc un besoin pour implanter un élément de détection le plus en avant du véhicule tout en garantissant sa protection et sans pour autant perturber son fonctionnement. Par ailleurs, il est préférable que la position de l'élément de détection puisse être réglée.

A cet effet, l'objet de l'invention concerne un dispositif de support d'un élément de détection, notamment pour véhicule automobile, ledit dispositif de support comprenant:
- un support de fixation comprenant :
   - une partie de support plane ou sensiblement plane,
   - une partie de fixation comprenant deux parois planes ou sensiblement planes inclinées et reliées par un bord de liaison, ladite partie de fixation étant reliée à un bord de la partie de support parallèle au bord de liaison, ladite partie de fixation étant pourvue d'éléments de fixation destinés à la fixation du support de fixation à un élément structurel d'un véhicule automobile,
- un boîtier de protection ouvert destiné à recevoir l'élément de détection et comprenant une paroi de fond plane ou sensiblement plane entourée de parois latérales perpendiculaires ou sensiblement perpendiculaires à la paroi de fond, la paroi de fond du boîtier de protection étant appliquée contre la partie de support,
- des éléments d'assemblage du boîtier de protection au support de fixation, notamment dans une position choisie non prédéterminée.

Un tel agencement permet de protéger un élément de détection logé dans le boîtier de protection. En outre, le boîtier de protection étant une pièce distincte du support de fixation, il est possible de l'assembler à ce dernier dans une position choisie, par exemple dans une position prédéterminée par rapport à l'élément structurel auquel est fixé le support de fixation. Autrement dit, cette position choisie du boîtier de protection n'est pas prédéterminée par rapport au support de fixation, mais peut être variable en fonction des dispersions géométriques de fabrication du véhicule.

Enfin, de par leur agencement, les parois inclinées de la partie de fixation permettent un blocage du support de fixation suivant des directions perpendiculaires aux parois inclinées et un déplacement de la partie de fixation suivant une direction parallèle à son bord de liaison, autorisant un réglage de la position de celle-ci lors de son assemblage à un élément structurel.

Ainsi, la position du boîtier de protection est réglable par rapport au support de fixation et la position du support de fixation est également réglable par rapport à l'élément structurel. Ceci peut permettre de compenser des dispersions géométriques de fabrication de l'élément structurel.

Avantageusement, le boîtier de protection peut être monté sur le support de fixation au moyen des éléments d'assemblage de sorte à être mobile en translation suivant au moins une direction de réglage prédéterminée dans le plan de la partie de support, notamment au moins une direction de réglage perpendiculaire au bord de liaison. Il est alors possible de régler de manière simple et rapide la position du boîtier de protection suivant cette direction de réglage. Lorsque cette dernière est perpendiculaire au bord de liaison du support de fixation, la position du dispositif de support peut être réglée dans deux directions perpendiculaires par rapport à l'élément structurel du véhicule.

Afin de permettre le montage du boîtier de protection en translation par rapport au support de fixation, les éléments d'assemblage peuvent comprendre des orifices oblongs correspondants ménagés au travers de la paroi de fond du boîtier de protection et de la partie de support du support de fixation, ces orifices oblongs présentant une plus grande longueur parallèle à au moins une direction de réglage prédéterminée dans le plan de la partie de support. Les éléments d'assemblage peuvent également comprendre des bords libres parallèles de la partie de support et du boîtier de protection coopérant par liaison glissière. Les éléments d'assemblage peuvent également comprendre des éléments de fixation. Les éléments d'assemblage peuvent notamment comprendre un ou plusieurs des éléments ci-dessus.

Le montage du boîtier de protection sur le support de fixation peut ainsi être réalisé de manière très simple tout en permettant un réglage.

Avantageusement, le support de fixation peut être réalisé d'une pièce. Ceci permet de faciliter sa réalisation et peut également permettre la réalisation d'un support de fixation pouvant subir une légère déformation élastique, notamment au niveau de sa partie de support.

En variante ou en combinaison, le boîtier de protection peut être réalisé d'une seule pièce, pour une réalisation plus simple.

Avantageusement, pour une plus grande solidité, le dispositif de support peut présenter des nervures de rigidification s'étendant perpendiculairement à la partie de support, notamment également perpendiculairement au bord de liaison. De préférence, ces nervures sont réalisées d'un seul tenant avec le support de fixation ou avec le boîtier de protection.

De telles nervures peuvent notamment être indifféremment choisies parmi :
- des nervures prévues sur la partie plane du support de fixation du côté opposé au boîtier de protection, notamment à proximité immédiate de la partie de fixation,
- des nervures prévues entre les parois latérales du boîtier de protection et sa paroi de fond.

Avantageusement, le dispositif de support peut comprendre au moins un élément d'indexation prédéterminé, notamment destiné à l'indexation du dispositif de support par rapport à l'élément structurel sur lequel il est fixé ou par rapport à un autre élément structurel du véhicule.

Le dispositif de support selon l'invention est adapté à une utilisation sur un véhicule automobile dans une position très en avant du véhicule, par exemple fixé sur une traverse extrême avant du véhicule.

Aussi, l'invention concerne également un véhicule automobile équipé d'un dispositif de support selon l'invention, le dispositif de support étant fixé par sa partie de fixation sur un élément structurel du véhicule, notamment un élément transversal, l'ouverture du boîtier de protection étant dirigée vers l'avant du véhicule. De préférence, l'élément structurel sur lequel est fixé ce dispositif de support est une traverse extrême avant.

Avantageusement, le véhicule comprend un élément de détection, par exemple un radar ou un dispositif de type LIDAR, logé dans le boîtier de protection du dispositif de fixation.

Le dispositif de support peut notamment être disposé derrière le bouclier du véhicule, plus précisément derrière une partie pleine du bouclier.

L'invention concerne enfin un procédé de montage d'un dispositif de support selon l'invention sur un élément structurel de véhicule automobile, notamment sur un élément transversal tel qu'une traverse extrême avant, comprenant :
- le positionnement de la partie de fixation sur ledit élément structurel, et le réglage de sa position suivant une direction parallèle au bord de liaison, optionnellement en indexant un élément d'indexation du dispositif de support avec un élément d'indexation de l'élément structurel ou du véhicule,
- la fixation de la partie de fixation sur l'élément structurel au moyen des éléments de fixation,
- l'assemblage du boîtier de protection au support de fixation au moyen des éléments d'assemblage, notamment dans une position choisie, optionnellement suite à un réglage de la position du boîtier de protection suivant au moins une direction prédéterminée de réglage.

Il est ensuite possible de fixer un élément de détection à l'intérieur du boîtier de protection. Eventuellement, cet élément de détection peut être fixé au boîtier de protection avant l'assemblage de celui-ci au support de fixation.

L'invention est maintenant décrite en référence aux dessins annexés, non limitatifs, dans lesquels :
- la figure 1 est une vue en perspective partielle de l'avant d'un véhicule automobile ;
- la figure 2 est une vue similaire à la figure 1, le bouclier du véhicule étant ôté ;
- la figure 3 est une vue de face du dispositif de support de la figure 2 selon un mode de réalisation de l'invention ;
- la figure 4 est une vue arrière du dispositif de support représenté figure 3 ;
- les figures 5 et 6 représentent des étapes de montage du dispositif de support représenté figures 2 à 4.

Dans la présente description, les termes avant, arrière, supérieur, inférieur, font référence aux directions avant et arrière du véhicule, lorsque le dispositif de fixation est monté sur le véhicule. Les axes X, Y, Z, correspondent respectivement à l'axe longitudinal (d'avant en arrière), transversal et vertical du véhicule.

Par sensiblement horizontal, longitudinal ou vertical, on entend une direction/un plan formant un angle d'au plus ±20°, voire d'au plus 10° ou d'au plus 5° avec une direction/un plan horizontal, longitudinal ou vertical.

Par sensiblement parallèle, perpendiculaire ou à angle droit, on entend une direction/un angle s'écartant d'au plus ±20°, voire d'au plus 10° ou d'au plus 5° d'une direction parallèle, perpendiculaire ou d'un angle droit.

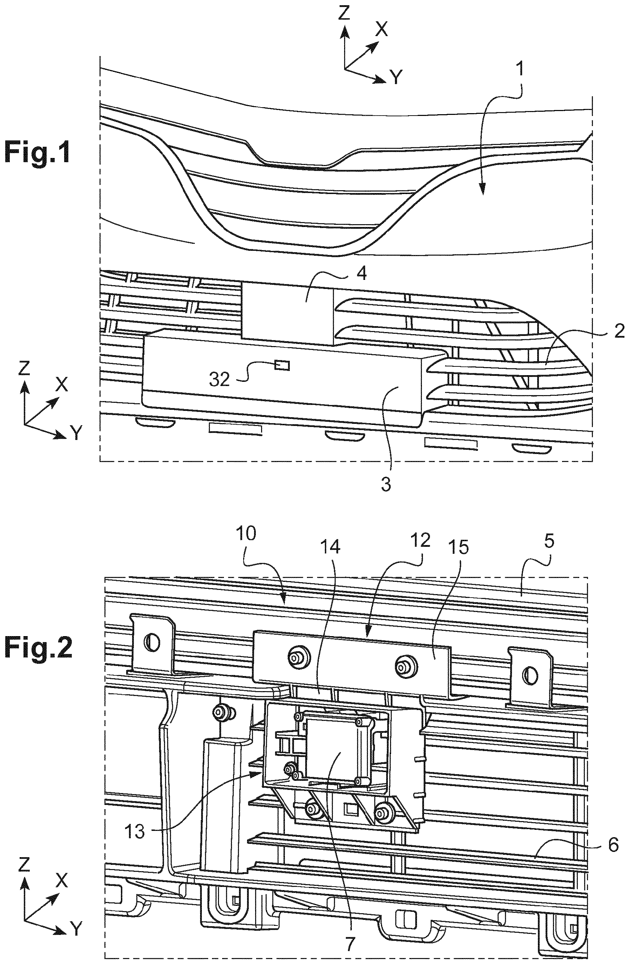

L'avant d'un véhicule automobile est partiellement représenté sur la figure 1. On peut notamment distinguer le bouclier avant 1 du véhicule lequel présente, en partie inférieure, une grille 2 pour l'aération du comportement moteur et, sensiblement au milieu de cette grille suivant la direction transversale du véhicule, une première plaque 3 destinée à recevoir une plaque d'immatriculation, et une deuxième plaque 4 située au-dessus de la première plaque 3.

Sur la figure 2, le bouclier avant 1 a été ôté, on peut ainsi distinguer notamment une traverse extrême avant 5 s'étendant suivant la direction transversale Y du véhicule et formant un élément structurel du véhicule, ainsi que des volets pilotés 6 situés derrière la grille d'aération 2 du bouclier 1. On distingue également un dispositif de support 10 selon l'invention. Ce dernier est maintenant décrit en référence aux figures 2 à 4.

Le dispositif de support 10 comprend un support de fixation 12 et un boîtier de protection ouvert 13. Par ouvert, on entend que le boîtier de protection 13 présente une face non fermée.

Le support de fixation 12 comprend une partie de support 14 et une partie de fixation 15. La partie de support 14 se présente sous la forme d'une plaque sensiblement plane. Cette plaque peut ainsi présenter des aspérités, nervures ou autre, mais est généralement plane.

La partie de fixation 15 comprend quant à elle deux parois 15a, 15b inclinées et reliées par un bord de liaison 16. Ces parois 15a, 15b sont ici perpendiculaires. L'invention n'est toutefois pas limitée par un angle particulier, cet angle pouvant être choisi en fonction de la forme de l'élément structurel sur lequel la partie de fixation 15 doit être fixée.

La partie de fixation 15 est en outre reliée à un bord 14a de la partie de support 14, ce bord 14a, ici un bord supérieur, étant parallèle au bord de liaison 16. Enfin, la partie de fixation 15 est pourvue d'éléments de fixation pour la fixation du support de fixation 12 à un élément structurel du véhicule automobile, ici la traverse extrême avant 5. Ces éléments de fixation sont ici des orifices 17a, 17b et 18a, 18b ménagés au travers des parois 15a, 15b respectivement et des rivets ou des vis 19. Ces éléments de fixation sont notamment conformés pour permettre un réglage de la position du support de fixation 12 par rapport à la traverse extrême avant 5 suivant une direction parallèle au bord de liaison 16. Dans l'exemple représenté, les orifices 17a, 17b et 18a, 18b sont des orifices oblongs, dont la plus grande longueur est parallèle au bord de liaison 16.

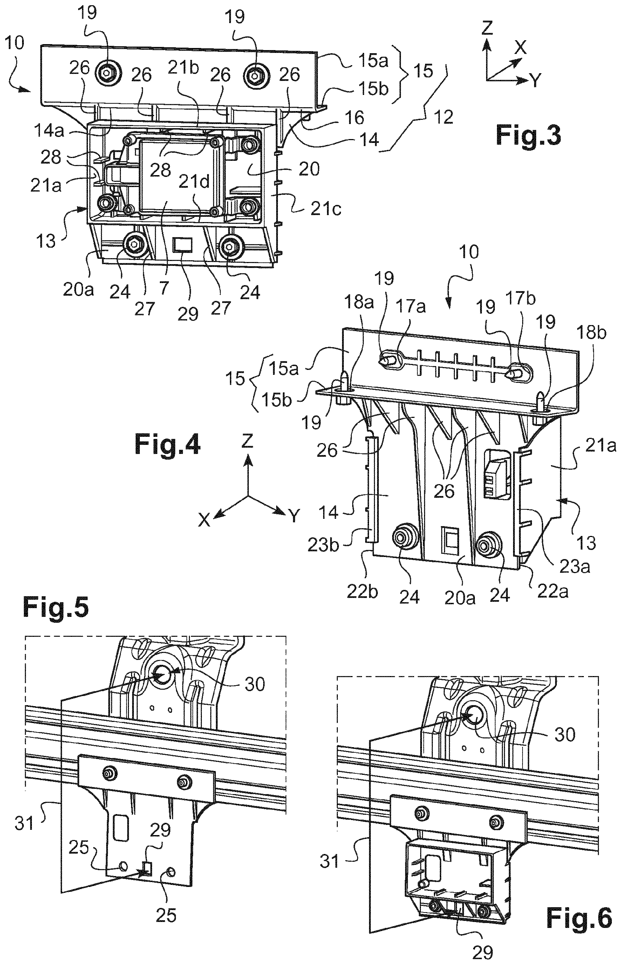

Le boîtier de protection 13 est destiné à recevoir un élément de détection 7 (fig. 2 et 3). Il présente une paroi de fond 20 sensiblement plane entourée de parois latérales 21a, 21b, 21c, 21d perpendiculaires à la paroi de fond 20. Tel que représenté, cette paroi de fond 20 est appliquée contre la partie de support 14 du support de fixation 12, ici du côté de la partie de support 14 opposé à la paroi 15b. L'invention n'est toutefois pas limitée à cet agencement particulier, pourvu que le support de fixation puisse être fixé à un élément structurel dans l'environnement souhaité et que le boîtier de protection puisse être placé avec son ouverture dirigée vers l'avant du véhicule.

Le dispositif de fixation 10 selon l'invention comprend par ailleurs des éléments d'assemblage du boîtier de protection 13 au support de fixation 12. Il est ainsi possible d'assembler le boîtier de protection 13 au support de fixation 12, notamment en une position choisie sur le support de fixation 12. Quelque soit notamment la forme du dispositif de fixation selon l'invention, ces éléments d'assemblage sont de préférence conformés pour permettre un réglage de la position du boîtier de protection par rapport au support de fixation.

Dans un mode de réalisation non représenté, ces éléments d'assemblage peuvent ainsi comprendre des trous oblongs dans la ou les directions de réglage souhaitées, ces trous oblongs étant ménagés au travers de la paroi de fond du boîtier de protection et de la partie de support du support de fixation. La plus grande longueur de ces orifices oblongs est alors parallèle à ladite au moins une direction de réglage prédéterminée.

Dans le mode de réalisation représenté, les éléments d'assemblage comprennent des bords libres parallèles 22a, 22b de la partie de support 14 coopérant par liaison glissière avec des bords libres parallèles 23a, 23b du boîtier de protection 13. Les éléments d'assemblage comprennent en outre des éléments de fixation, ici des orifices correspondants réalisés au travers de la paroi de fond 20 du boîtier de protection et de la partie de support 14 du support de fixation et des vis ou rivets 24. Seuls les orifices 25 de la partie de support sont visibles sur la figure 5. Les orifices des éléments de fixation sont ici circulaires, mais pourraient être oblongs avec une plus grande direction parallèle aux bords libres parallèles : le boîtier de protection serait alors réglable parallèlement aux bords libres parallèles sur une longueur prédéterminée.

On notera que dans l'exemple représenté, les éléments de fixation 24 sont réalisés sur une partie 20a de la paroi de fond 20 située en dehors du logement défini par les parois parallèles 21a-21d recevant l'élément de détection 7. Ceci permet de faciliter la fixation sans avoir besoin d'augmenter l'espace défini par les parois parallèles 21a-21d pour loger ces éléments de fixation. Les parois parallèles 21a-21d peuvent ainsi entourer l'élément de détection 7 au plus près, pour une meilleure protection.

Dans l'exemple, le boîtier de protection 13 comme le support de fixation 12 sont chacun réalisé d'une pièce. Quelque soit leur forme, ils peuvent être en matériau métallique ou en matériau polymère, notamment suffisamment rigide pour ne pas se déformer en cas de petits chocs (chocs à 4 km/h). Pour améliorer leur rigidité, chacune de ces pièces peut comprendre des nervures de rigidification s'étendant perpendiculairement à la partie de support 14.

Dans l'exemple, le support de fixation 12 présente ainsi une pluralité de nervures 26 s'étendant perpendiculairement à la partie de support 14 et au bord de liaison 16. Les nervures 26 sont plus particulièrement disposées entre la partie de fixation 15 et la partie de support 14, ici entre la paroi 15b et la partie de support 14. On notera notamment que la paroi 15a s'étend sensiblement dans le prolongement de la partie de support 14. Des nervures 26 relativement profondes sont ainsi du côté de la partie de support ne recevant pas le boîtier de protection 13 (fig.4), des nervures 26 moins profondes étant situées du côté du boîtier de protection afin de ne pas gêner la fixation de celui-ci (fig. 3).

Des nervures 27, 28 sont également prévues sur le boîtier de protection 13 perpendiculairement à la paroi de fond 20 et au bord de liaison 16. Les nervures 27 sont disposées entre la partie 20a de la paroi de fond et la paroi latérale 21d (fig.3) et les nervures 28 sont disposées entre les parois latérales 21a-21d et la paroi de fond 20 à l'intérieur du logement défini par les parois latérales 21a-21d. Ces nervures 27, 28 sont donc disposées sur des parties du boîtier de protection qui ne sont pas en contact avec la partie de support 14.

De telles nervures 26-28 permettent de renforcer la robustesse du dispositif de fixation lors d'une déformation élastique, par exemple suivant une direction perpendiculaire à la partie de support, autrement dit suivant la direction longitudinale X du véhicule lorsque le dispositif de fixation 10 est fixé à un élément structurel 5 de celui-ci. L'invention n'est bien entendu pas limitée par un nombre et un positionnement particulier des nervures pourvu qu'elles permettent de renforcer la robustesse du dispositif de support notamment selon les contraintes qu'il est susceptible de subir.

Le dispositif de fixation 10 comprend également un élément d'indexation 29, ici un orifice réalisé au travers de la partie de support 14 et de la paroi de fond 20 (fig.3), lequel peut être utilisé pour le montage du dispositif de fixation 10 sur un élément structurel du véhicule tel que décrit ci-après.

Le montage du dispositif de support 10 est maintenant décrit. On commence par positionner la partie de fixation 15 sur l'élément structurel, ici la traverse extrême avant 5. A cet effet, les parois inclinées 15a, 15b de la partie de fixation sont chacune appliquées contre une paroi de la traverse extrême avant 5. La position du support de fixation 12 par rapport à la traverse 5 peut ensuite être réglée au moyen d'un outil 31 (gabarit- représenté schématiquement fig.5, 6), ici en indexant l'élément d'indexation 29 du dispositif de support avec un élément d'indexation 30 de l'élément structurel ou du véhicule. Un réglage en Y est alors obtenu. L'élément d'indexation 30 est ici un orifice réalisé dans un élément solidaire de la traverse 5. Les orifices oblongs 17a, 17b, 18a, 18b permettent un réglage de la position alors que le support de fixation est maintenu au moyen des vis ou rivets 19 partiellement fixés. Une fois le réglage effectué, les vis ou rivets 19 sont fixés et le support de fixation 12 est rendu solidaire de la traverse 5.

On procède ensuite à l'assemblage du boîtier de protection 13 au support de fixation 12 en faisant coopérer les bords libres parallèles 23a, 23b du boîtier de protection avec les bords parallèles 22a, 22b du support de fixation. Le réglage de la position du boîtier de protection suivant la direction bords parallèles 23a, 23b (réglage en Z) peut se faire au moyen du même outil 31, en indexant l'élément d'indexation 29 du dispositif de support avec l'élément d'indexation 30 de l'élément structurel 5 (fig.6).

On peut ensuite finaliser l'assemblage en solidarisant le boîtier de protection 13 au support de fixation 12 au moyen des vis 24.

L'élément de détection 7 peut alors être introduit dans le boîtier de protection et fixé à ce dernier, notamment à la paroi de fond 20, par exemple au moyen de vis ou rivets, tel que représenté fig.2. Le bouclier 1 peut ensuite être mis en place. Celui-ci peut présenter un orifice 32 d'indexation, par exemple au niveau de la plaque 3 (fig.1) servant de référence pour vérifier le bon positionnement du bouclier 1 par rapport à l'élément de détection 7, cet orifice 32 devant correspondre avec l'élément d'indexation 29 du dispositif de fixation. Le bouclier 1 étant mis en place, la plaque 4 est en regard du boîtier de protection 13 le protégeant des salissures et projections d'eau.

Ainsi, en cas de petits chocs longitudinaux, le bouclier 1 est susceptible de venir en contact avec le boîtier de protection, entrainant un déplacement de celui-ci et de la partie de support vers l'arrière du véhicule, la partie de fixation restant solidaire de l'élément structurel. La forme de plaque de la partie de support lui confère une certaine flexibilité et élasticité, de sorte que lorsque le bouclier 1 n'appuie plus sur le dispositif de support, la partie de support reprend sa position initiale, ici sensiblement verticale. L'intégrité de l'élément de détection 7 logé dans le boîtier de protection reste entière.

L'invention permet ainsi une fixation avec réglage d'un élément de détection tout en protégeant ce dernier. L'invention n'est pas limitée au mode de réalisation représenté. On comprend notamment que le boîtier de protection peut être monté différemment sur le support de fixation, afin par exemple de permettre un réglage de sa position parallèlement et perpendiculairement au bord de liaison, par exemple par des trous oblongs correspondants disposés de manière appropriée.

## Revendications

1. Dispositif de support (10) d'un élément de détection (7), ledit dispositif de support (10) comprenant:
- un support de fixation (12) comprenant :
- une partie de support (14) sensiblement plane,
- une partie de fixation (15) comprenant deux parois sensiblement planes inclinées (15a, 15b) et reliées par un bord de liaison (16), ladite partie de fixation étant reliée à un bord (14a) de la partie de support parallèle au bord de liaison (16), ladite partie de fixation (15) étant pourvue d'éléments de fixation (17a, 17b, 18a, 18b, 19) destinés à la fixation du support de fixation (12) à un élément structurel (5) d'un véhicule automobile,
- un boîtier de protection ouvert (13) destiné à recevoir l'élément de détection (7) et comprenant une paroi de fond (20) sensiblement plane entourée de parois latérales (21a-21d) sensiblement perpendiculaires à la paroi de fond, cette dernière étant appliquée contre la partie de support (14),
- des éléments d'assemblage (22a, 22b, 23a, 23b, 24, 25) du boîtier de protection (13) au support de fixation, notamment dans une position choisie non prédéterminée.

2. Dispositif de support (10) selon la revendication 1, **caractérisé en ce que** le boîtier de protection (13) est monté sur le support de fixation, par les éléments d'assemblage (22a, 22b, 23a, 23b), mobile en translation suivant au moins une direction de réglage prédéterminée dans le plan de la partie de support, notamment au moins une direction de réglage perpendiculaire au bord de liaison (16).

3. Dispositif de support (10) selon la revendication 1 ou 2, **caractérisé en ce que** les éléments d'assemblage comprennent un ou plusieurs des éléments suivants :
- des orifices oblongs correspondants ménagés au travers de la paroi de fond du boîtier de protection et de la partie de support du support de fixation, ces orifices oblongs présentant une plus grande longueur parallèle à au moins une direction de réglage prédéterminée dans le plan de la partie de support,
- des bords libres parallèles (22a, 22b, 23a, 23b) de la partie de support et du boîtier de protection coopérant par liaison glissière,
- des éléments de fixation (24, 25).

4. Dispositif de support (10) selon l'une quelconque des revendications 1 à 3, **caractérisé en ce que** le support de fixation (12) est réalisé d'une seule pièce.

5. Dispositif de support (10) selon l'une quelconque des revendications 1 à 4, **caractérisé en ce que** le boîtier de protection (14) est réalisé d'une seule pièce.

6. Dispositif de support (10) selon l'une quelconque des revendications 1 à 5, **caractérisé en ce qu'**il présente des nervures de rigidification (26, 27, 28) s'étendant perpendiculairement à la partie de support (14).

7. Dispositif de support (10) selon l'une quelconque des revendications 1 à 6, **caractérisé en ce qu'**il comprend au moins un élément d'indexation (29) prédéterminé.

8. Procédé de montage d'un dispositif de support (10) selon l'une des revendications 1 à 7 sur un élément structurel (7) de véhicule automobile, comprenant :
- le positionnement de la partie de fixation (15) sur ledit élément structurel (5), et le réglage de sa position suivant une direction parallèle au bord de liaison (16), optionnellement en indexant un élément d'indexation (29) du dispositif de support avec un élément d'indexation (30) de l'élément structurel ou du véhicule,
- la fixation de la partie de fixation (15) sur l'élément structurel au moyen des éléments de fixation (17a, 17b, 18a, 18b, 19),
- l'assemblage du boîtier de protection (13) au support de fixation (12) au moyen des éléments d'assemblage (22a, 22b, 23a, 23b, 24, 25), notamment dans une position choisie, optionnellement suite à un réglage de la position du boîtier de protection (13) suivant au moins une direction prédéterminée de réglage.

9. Véhicule automobile équipé d'un dispositif de support (10) selon l'une des revendications 1 à 7, le dispositif de support (10) étant fixé par sa partie de fixation (15) sur un élément structurel (5) du véhicule, notamment un élément transversal, l'ouverture du boîtier de protection (13) étant dirigée vers l'avant du véhicule, et le boitier de protection recevant un élément de détection (7).

10. Véhicule automobile selon la revendication 9, **caractérisé en ce que** le dispositif de fixation (10) est situé derrière un bouclier (1) du véhicule automobile, une partie pleine (4) du bouclier étant située en regard du boîtier de protection (13).

## Patentansprüche

1. Haltevorrichtung (10) für einen Sensor (7), wobei die Haltevorrichtung (10) Folgendes beinhaltet:
- eine Befestigungshalterung (12), die Folgendes beinhaltet:
- einen im Wesentlichen ebenen Halteabschnitt (14),
- einen Befestigungsabschnitt (15), der zwei im Wesentlichen ebene geneigte Wände (15a, 15b) beinhaltet, die durch eine Verbindungskante (16) verbunden sind, wobei der Befestigungsabschnitt mit einer Kante (14a) des Halteabschnitts, die parallel zu der Verbindungskante (16) verläuft, verbunden ist, wobei der Befestigungsabschnitt (15) über Befestigungselemente (17a, 17b, 18a, 18b, 19) verfügt, die dazu bestimmt sind, die Befestigungshalterung (12) an einem Strukturelement (5) eines Kraftfahrzeugs zu befestigen,
- ein offenes Schutzgehäuse (13), das dazu bestimmt ist, den Sensor (7) aufzunehmen, und das eine im Wesentlichen ebene Bodenwand (20) beinhaltet, die von Seitenwänden (21a-21d), die zu der Bodenwand im Wesentlichen senkrecht sind, umgeben ist, wobei letztere an dem Halteabschnitt (14) anliegt,
- Elemente zum Verbinden (22a, 22b, 23a, 23b, 24, 25) des Schutzgehäuses (13) mit der Befestigungshalterung, insbesondere in einer nicht vorgegebenen, frei gewählten Position.

2. Haltevorrichtung (10) nach Anspruch 1, **dadurch gekennzeichnet, dass** das Schutzgehäuse (13) mit Hilfe der Verbindungselemente (22a, 22b, 23a, 23b), die gemäß mindestens einer vorgegebenen Einstellrichtung in der Ebene des Halteabschnitts, insbesondere mindestens einer Einstellrichtung, die zu der Verbindungskante (16) senkrecht ist, translatorisch bewegbar sind, an der Befestigungshalterung montiert ist.

3. Haltevorrichtung (10) nach Anspruch 1 oder 2, **dadurch gekennzeichnet, dass** die Verbindungselemente eines oder mehrere der folgenden Elemente beinhalten:
- entsprechende Langlöcher, die durch die Bodenwand des Schutzgehäuses und den Halteabschnitt der Befestigungshalterung eingerichtet sind, wobei diese Langlöcher parallel zu mindestens einer vorgegebenen Einstellrichtung in der Ebene des Halteabschnitts eine größere Länge aufweisen,
- parallele freie Kanten (22a, 22b, 23a, 23b) des Halteabschnitts und des Schutzgehäuses, die durch eine Gleitverbindung zusammenwirken,
- Befestigungselemente (24, 25).

4. Haltevorrichtung (10) nach einem der Ansprüche 1 bis 3, **dadurch gekennzeichnet, dass** die Befestigungshalterung (12) einstückig ausgebildet ist.

5. Haltevorrichtung (10) nach einem der Ansprüche 1 bis 4, **dadurch gekennzeichnet, dass** das Schutzgehäuse (14) einstückig ausgebildet ist.

6. Haltevorrichtung (10) nach einem der Ansprüche 1 bis 5, **dadurch gekennzeichnet, dass** sie Versteifungsrippen (26, 27, 28) aufweist, die sich senkrecht zu dem Halteabschnitt (14) erstrecken.

7. Haltevorrichtung (10) nach einem der Ansprüche 1 bis 6, **dadurch gekennzeichnet, dass** sie mindestens ein vorgegebenes Ausrichtungselement (29) beinhaltet.

8. Verfahren zur Montage einer Haltevorrichtung (10) nach einem der Ansprüche 1 bis 7 an einem Strukturelement (7) eines Kraftfahrzeugs, das Folgendes beinhaltet:
- Positionieren des Befestigungsabschnitts (15) an dem Strukturelement (5) und Ausrichten seiner Position gemäß einer zu der Verbindungskante (16) parallelen Richtung, optional durch Ausrichten eines Ausrichtungselements (29) der Haltevorrichtung nach einem Ausrichtungselement (30) des Strukturelements oder des Fahrzeugs,
- Befestigen des Befestigungsabschnitts (15) an dem Strukturelement mit Hilfe der Befestigungselemente (17a, 17b, 18a, 18b, 19),
- Verbinden des Schutzgehäuses (13) mit der Befestigungshalterung (12) mit Hilfe der Verbindungselemente (22a, 22b, 23a, 23b, 24, 25), insbesondere in einer frei gewählten Position, optional im Anschluss an eine Einstellung der Position des Schutzgehäuses (13) gemäß mindestens einer vorgegebenen Einstellrichtung.

9. Kraftfahrzeug, das mit einer Haltevorrichtung (10) nach einem der Ansprüche 1 bis 7 ausgerüstet ist, wobei die Haltevorrichtung (10) durch ihren Befestigungsabschnitt (15) an einem Strukturelement (5) des Fahrzeugs, insbesondere einem Querelement, befestigt ist, wobei die Öffnung des Schutzgehäuses (13) zur Vorderseite des Fahrzeugs zeigt und das Schutzgehäuse einen Sensor (7) aufnimmt.

10. Kraftfahrzeug nach Anspruch 9, **dadurch gekennzeichnet, dass** sich die Befestigungsvorrichtung (10) hinter einem Stoßfänger (1) des Kraftfahrzeugs befindet, wobei sich ein durchgehender Abschnitt (4) des Stoßfängers gegenüber dem Schutzgehäuse (13) befindet.

## Claims

1. Support device (10) for a detection element (7), said support device (10) comprising:
- a fastening support (12) comprising:
- a substantially flat support part (14),
- a fastening part (15) comprising two inclined, substantially flat walls (15a, 15b) that are connected by a connecting edge (16), said fastening part being connected to an edge (14a) of the support part parallel to the connecting edge (16), said fastening part (15) being provided with fastening elements (17a, 17b, 18a, 18b, 19) intended to fasten the fastening support (12) to a structural element (5) of a motor vehicle,
- an open protective casing (13) that is intended to receive the detection element (7) and comprises a substantially flat end wall (20) surrounded by side walls (21a-21d) substantially perpendicular to the end wall, the latter being pressed against the support part (14),
- assembly elements (22a, 22b, 23a, 23b, 24, 25) for assembling the protective casing (13) on the fastening support, in particular in a chosen position that is not predetermined.

2. Support device (10) according to Claim 1, **characterized in that** the protective casing (13) is mounted on the fastening support by way of the assembly elements (22a, 22b, 23a, 23b) so as to be movable in translation in at least one predetermined adjustment direction in the plane of the support part, in particular at least one adjustment direction perpendicular to the connecting edge (16).

3. Support device (10) according to Claim 1 or 2, **characterized in that** the assembly elements comprise one or more of the following elements:
- corresponding oblong orifices made through the end wall of the protective casing and of the support part of the fastening support, these oblong orifices having a greatest length parallel to at least one predetermined adjustment direction in the plane of the support part,
- parallel free edges (22a, 22b, 23a, 23b) of the support part and of the protective casing cooperating by way of a sliding connection,
- fastening elements (24, 25).

4. Support device (10) according to any one of Claims 1 to 3, **characterized in that** the fastening support (12) is made in one piece.

5. Support device (10) according to any one of Claims 1 to 4, **characterized in that** the protective casing (14) is made in one piece.

6. Support device (10) according to any one of Claims 1 to 5, **characterized in that** it has stiffening ribs (26, 27, 28) extending perpendicularly to the support part (14) .

7. Support device (10) according to any one of Claims 1 to 6, **characterized in that** it comprises at least one predetermined indexing element (29).

8. Method for mounting a support device (10) according to one of Claims 1 to 7 on a structural element (7) of a motor vehicle, comprising:
- the positioning of the fastening part (15) on said structural element (5) and the adjustment of its position in a direction parallel to the connecting edge (16), optionally by indexing an indexing element (29) of the support device with an indexing element (30) of the structural element or of the vehicle,
- the fastening of the fastening part (15) to the structural element by means of the fastening elements (17a, 17b, 18a, 18b, 19),
- the assembly of the protective casing (13) on the fastening support (12) by means of the assembly elements (22a, 22b, 23a, 23b, 24, 25), in particular in a chosen position, optionally following adjustment of the position of the protective casing (13) in at least one predetermined adjustment direction.

9. Motor vehicle equipped with a support device (10) according to one of Claims 1 to 7, the support device (10) being fastened by its fastening part (15) to a structural element (5) of the vehicle, in particular a transverse element, the opening of the protective casing (13) being directed towards the front of the vehicle, and the protective casing receiving a detection element (7).

10. Motor vehicle according to Claim 9, **characterized in that** the fastening device (10) is situated behind a front apron (1) of the motor vehicle, a solid part (4) of the front apron being situated next to the protective casing (13).
